# EUROPÄISCHE PATENTSCHRIFT

(11) **EP 2 133 197 B1**
(45) Veröffentlichungstag und Bekanntmachung des Hinweises auf die Patenterteilung: **13.03.2013**
(21) Anmeldenummer: 08405154.9
(22) Anmeldetag: 11.06.2008
(51) Int. Cl.: B32B 3/12, B32B 37/12, B32B 37/14, B32B 7/12

(54) **Verbundplatte**
Composite plate
Plaque composite

(43) Veröffentlichungstag der Anmeldung: 16.12.2009
(73) Patentinhaber: 3A Technology & Management AG, 8212 Neuhausen am Rheinfall (CH)
(72) Erfinder: Ackermann, Jürgen, 49565 Bramsche (DE)
(74) Vertreter: Gernet, Samuel Andreas

(56) Entgegenhaltungen:
- EP-A- 0 288 843
- EP-A- 1 186 398
- GB-A- 2 104 839
- LU-A1- 86 594
- US-A- 4 461 796

## Beschreibung

Die Erfindung betrifft eine Verbundplatte aus einem zellenförmigen Kern und mindestens einer Deckschicht, wobei der zellenförmige Kern eine Wabenstruktur aus Aluminium, die Deckschicht oder die Deckschichten ein Papier oder ein faserhaltiges Flächengebilde sind, und einem zwischen den Stirnseiten des zellenförmigen Kerns und der Deckschicht angeordneten Klebstoff, sowie ein Verfahren zu deren Herstellung.

Beispielsweise aus der EP 0527109 ist bekannt, Verbundplatten aus einem zellenförmigen Kern mit mindestens einer Deckschicht durch Verbinden der Deckschicht mit dem zellenförmigen Kern mit Hilfe von Klebstoff herzustellen. Als Deckschichten werden Insbesondere Aluminiumfollen beschrieben. Der zellenförmige Kern kann beispielsweise aus Aluminium oder auch Papier sein. Zur sicheren Verbindung der Deckschicht mit dem Kern wird vorgeschlagen, die Stirnseite der Zellen mit Klebstoff zu belegen und eine zweite Klebstoffschicht auf der Deckschicht aufzubringen und die beiden Klebstoffschichten miteinander In Verbindung zu bringen. Derart hergestellte Verbundplatten weisen den Nachteil auf, dass insbesondere die Klebstoffschicht auf der Deckschicht vollflächig aufgebracht werden muss. Im Hinblick auf die nur linlenförmige Stimseite der Waben an der Deckschicht sind grosse Mengen an Klebstoff zum Verbinden von Aluminiumdeckschicht mit der Aluminiumwabe unnötigerweise zu verarbeiten.

Aus EP 0 288 843 Ist eine Verstärkungsplatte mit einem Kern in Wabenstruktur und Deckschichten bekannt. Die Deckschichten und der Kern werden mit einem wärmehärtenden Epoxidharz verklebt. Aus GB 2 104 839 ist eine mit Deckschichten belegte Wabenstruktur bekannt, wobei die Deckschichten mittels Epoxidharzen mit der Wabenstruktur verbunden sind. LU 86 594 beschreibt eine Leichtbauplatte aus einem Wabenkörper und Aussenplatten, wobei die Teile durch Klebeschichten aus einem thermoplastischen Harz verbunden sind. US 4,461,796 nennt ein Schall verminderndes Material mit einem Wabenkem und einem Deckmaterial, Zum Verkleben der Materialien werden druckempfindliche klebrige Adhäsivstoffe genannt. Schliesslich beschreibt EP 1 186 398 eine Webenkern-Verbundplatte mit einem Kantenschutz. Der Kantenschutz wird beispielsweise mit einem chemisch oder physikalisch abbindenden Klebstoff am Plattenrand befestigt.

Aufgabe vorliegende Erfindung ist es, diesen Nachteil zu vermeiden und eine Verbundplatte mit Deckschichten anderer Art zu beschreiben, die bei kleinem Materlalaufwand, Insbesondere Klebstoffaufwand, eine grosse strukturelle Festigkelt und grosse Resistenz gegen Deiaminierung aufweist.

Erfindungsgemäss wird dies dadurch erreicht, dass der Klebstoff der Klebstoff ein reaktiver Schmelzkebstoffe, ein reaktiver Hotmelt, ein reaktiver Schmelzklebstoff auf Grundlage von Polyurethanen, ein reaktiver Schmelzklebstoff oder reaktiver Hotmelt, welcher die Eigenschaften der Schmelzklebstoffe mit denen der reaktiven Polyurethane kombiniert, oder ein Holzleim ist.

Der zellenförmige Kern weist eine Wabenstruktur auf und es kann ein Wabenkern, zweckmässig ein Wabenkern mit Zellen polygonalen Querschnittes und insbesondere mit Waben sechseckigen Querschnittes, sein.

Der zellenförmige Kern ist ein- oder beidseitig mit einer Deckschicht belegt. D.h. ein zellenförmiger Kern weist auf einer Seite eine Decksicht auf und der Kern ist auf der anderen Seite offen liegend. In bevorzugter Weise ist der zellenförmige Kern beidseitig mit Deckschichten belegt. Die beiden auf dem Kern angebrachten Deckschichten können gleich oder verschieden sein. Als Deckschichten können Mineralpapiere, Harz getränkte Papiere und/oder faserhaltige Flächengebilde, wie Mehrlagenvliese, angewendet werden.

Fallweise kann am zellenförmigen Kern bereits eine Seite mit einer Metallschicht, wie einer Metallfolie oder einem Metallblech oder einer Kunststoffschicht belegt sein oder ein einseitig mit einer Deckschicht versehener zellförmiger Kern kann umseitig mit einer Metallschicht, wie einer Metallfolie oder einem Metallblech oder einer Kunststoffschicht, belegt werden.

Mineralpapiere sind stark mit Füllstoffen, insbesondere Feuer hemmenden Füllstoffen, wie Polyammonphosphate, Aluminiumhydroxid oder Salze, z.B. der Borsäure, usw. versetzt. Die Mineralpapiere können Fasern, beispielsweise Glasfasern, enthalten. Das Quadratmetergewicht kann beispielsweise von 100 bis 500 g/m² betragen. Die Dicke der Mineralpapiere kann von 0,1 bis 1,0 mm betragen, wobei Dicken von 0,2 bis 0,4 mm bevorzugt und Dicken von etwa 0,3 mm besonders bevorzugt sind.

Harz getränkte Papiere sind Papiere, die beispielsweise mit Melaminharzen getränkte oder beschichtete Papiere. Die Melaminpapiere können bevorzugt Fasern, beispielsweise Glasfasern, enthalten. Das Quadratmetergewicht kann beispielsweise von 200 bis 800 g/m² betragen. Die Dicke der Melaminpapiere kann von 0,1 bis 1,0 mm betragen, wobei Dicken von 0,2 bis 0,4 mm bevorzugt und Dicken von 0,2 bis 0,3 mm besonders bevorzugt sind.

Die genannten Papiere sind vorzugsweise feuerfest oder flammhemmend oder feuerfest oder flammhemmend ausgerüstet.

Die faserhaltigen Flächengebilde sind beispielsweise ein- oder mehrlagige Gewebe, Gewirke, Gespinste, Gestricke, Vliese und vorzugsweise Mehrlagenvliese. Die faserhaltigen Flächengebilde sind beispielsweise aus natürlichen Fasern, wie Jute, Sisal, Hanf, Baumwolle, Wolle, Seide etc., aus Vlskose- oder Acetatfasern, aus Kunststofffasern, wie Polyamld-, Aramid-, Kevlar-, Polyester-, Polyacrylnitril-, Polyethylen-, Polypropylen- oder Polyurethanfasern etc., und/oder aus Kohlenstoff- und/oder Glasfasern oder Gemischen daraus. Die flächenförmigen Fasergebilde können mit organischen oder anorganischen Schlichten behandelt, wie beschichtet, getränkt etc., sein. Das Volumengewicht kann beispielsweise von 150 bis 800 kg/m³ betragen. Das Flächengewicht kann beispielsweise von 100 bis 400 g/m² betragen. Typische Dicken von Geweben, Gewirken, Gespinsten oder Gestricken, sind von 0.5 bis 2 mm. Vliese und vorzugsweise Mehrlagenvliese weisen Dicken von 0.05 bis 1 mm auf. Zweckmässig ist ein Glasvlies mit einem Flächengewicht von 100 bis 400 g/m² und Insbesondere mit ca. 300 g/m². Das Glasvlies ist in besonders zweckmässiger Ausführungsform mineralisch, z.B. mit Siliziumverbindungen, beschichtet.

Wie oben erwähnt, können die Melamin- oder Mineralpapiere mit Fasern verstärkt sein, wobei die oben genannten textilen Fasern, Kunststofffasern oder Glas- oder Karbonfasem Bestandteil des Papiers sein können. Die verstärkten Melamin- oder Mineralpapiere können die verstärkenden Fasern als solche enthalten oder als Verbund- oder Schichtmaterial aus dem Papier und beispielsweise Geweben, Gewirken oder Vliesen vorliegen.

Als Klebstoffe werden reaktive Schmelzklebestoffe oder Hotmelts sowie Holzielme eingesetzt.

Reaktive Schmelzklebestoffe sind melst auf der Grundlage von Polyurethan-Prepolymeren aufgebaut.

Die reaktiven Schmelzklebstoffe oder reaktiven Hotmelts kombinieren die Eigenschaften der Schmelzklebstoffe mit denen der reaktiven Polyurethane. Durch den Phasenübergang von flüssig zu fest beim Abkühlen wird eine ausreichende Frühfestigkeit erreicht. Die endgültige Aushärtung geschieht bei der Vernetzung der Polyurethananteile mit Luftfeuchtigkeit. Danach ist der Klebstoff im Gegensatz zu den nichtreaktiven Hotmelts zu einem nicht wieder aufschmelzbaren Elastomer mit hoher Temperaturbeständigkeit ausgehärtet.

Leimarten, die unter die Holzleimarten fallen, sind Glutinleime, Kaseinleime, Harnstoff-Formaldehydharzleime (auch Polykondensationsleim oder UF-Leim), aus Kunstharzen in Verbindung mit Formaldehyd, der als Einkomponentenleim oder Zwelkomponentenleim, aus Leim und Härter verwendet wird. Es gehören dazu die Phenol-Fomaldehydharzleime (auch PF-Leim), Resorzin-Formaldehydharzleime (auch RF-Leim), aus flüssigem Leim und pulverförmigem Härter. Ferner sind zu nennen formaldehydarme Polykondensationsleime, formaldehydfreie Dispersionsleime, wie Welssielm, formaldehydfreier Dispersionsleim, basierend auf PVAC (PolyVinylAcetat), sowie PU-Leime, wie die einkomponentlgen PU-Leime (Polyurethan-Leime). Es handelt sich dabei um lösungsmittelfreie Reaktionsklebstoffe, die mit Hilfe von Feuchtigkeit aushärten. Dabei kommt es in vielen Fällen zu einem leichten Aufschäumen, wodurch eine hervorragende Spaltfüllung erreicht wird.

Nach vorliegender Erfindung liegt der Klebstoff zur Verarbeitung als solcher, beispielsweise pulveriger, pastöser, zähviskoser oder flüssiger Form vor.

In weiterer Ausführungsform kann der Klebstoff als Klebefolle, Klebefilm, resp. als follenförmiger Klebstoff. zur Verarbeitung vorliegen. Beispielsweise können als Klebefollen geschäumte oder schäumbare Folien verwendet werden. Bei den schäumbaren Folien sind die unter Wärmeeinwirkung aufschäumenden Klebefollen besonders bevorzugt. . Die Dicke der Klebstoffschichten und insbesondere der Klebefollen kann beispielsweise von 50 bis 500 µm betragen. Entsprechende Klebstoffmengen betragen für Klebefolien von 50 bis 250 g/m².

Bevorzugt werden feuchtigkeitshärtende Einkomponenten-Polyurethankleber und reaktive Hotmelts, sog. TPU.

Es kann vorteilhaft sein, Schmelzklebstoffe oder Holzielme anzuwenden, die Aufschäumen oder zumindest Neigung zum Aufschäumen zeigen.

Der Schmelzklebstoff oder Hotmelt, resp. Holzleim, wird in Mengen von beispielsweise 1 bis 250 g/m², zweckmässig 5 bis 100 g/m² und vorteilhaft 25 bis 50 g/m², zu verklebende Oberfläche angewendet.

Die zellenförmigen Kerne können beispielsweise aus Metallen sein. Bevorzugt sind die zellenförmigen Kerne aus Aluminium oder dessen Legierungen. Bevorzugt weisen die zellenförmigen Kerne ein Raumgewicht von 20 bis 120 kg/m³ auf.

Die zellenförmigen Kerne sind beispielsweise durch selektives Verkleben und Stapeln von Aluminiumfolien oder Aluminiumstreifen und anschliessendes Strecken des Folien- oder Bänderstapels herstellbar. Dazu werden beispielsweise Aluminiumfolien oder in Bänder geschnittene Aluminiumfolie, in einer Foliendicke von z.B. 10 - 100 µm, zweckmässig 40 - 80 µm und insbesondere 50 - 70 µm, mit einem Muster aus parallelen Klebstoffstreifen versehen, z.B. mit dem Klebstoff bedruckt oder bestrichen. Die mit dem Klebstoff versehenen Aluminiumfolien oder Aluminiumstreifen können nun lagenweise gestapelt werden, so, dass die Klebstoffstreifen der jeweils darüber liegenden Lage gegenüber Klebstoffstreifen der darunter liegenden Lage parallel, aber verschoben sind. Der Klebstoff wird aktiviert und die Aluminiumfolien oder Aluminiumbänder haften partiell über die Klebstoffstreifen aneinander. Es ist auch möglich an Stelle der Klebstoffstreifen beidseitig klebendes Klebeband einzusetzen. Aus den Folienstapeln können derart Blöcke erzeugt werden, die quer zur Klebestreifenrichtung, d.h. quer zur Wabenrichtung, Blockabschnitte abgetrennt, wie abgesägt werden. Die Blockabschnitte können danach gestreckt werden, wobei sich die Zellen oder Waben ausbilden. Die Dicke des abgetrennten Blockabschnittes entspricht der Zellen- oder Wabenhöhe und damit der Höhe des zellenförmigen Kerns.

Es können die Aluminiumfolien in Bänder geschnitten werden, wobei die Breite der Bänder insbesondere bereits die Höhe des späteren zellenförmigen Kerns definieren. Die Bänder können dann mit parallel laufenden Klebstoffstreifen, gleich wie oben erwähnt, beleimt, zum Stapel geschichtet und der Klebstoff aktiviert werden. Die Klebstoffstreifen erstrecken sich insbesondere über die Breite des jeweiligen Bandes, resp. über die Höhe des späteren zellenförmigen Kerns. Durch Auseinanderziehen des so gebildeten Stapels entsteht der zellenförmige Kern.

Durch das Auseinanderziehen des jeweiligen Blockabschnittes oder Stapels entstehen die zellenförmigen Kerne. Entsprechend der der Höhe und Breite des Blockabschnittes können Kerne fast bellebiger Ausdehnung In Länge und Breite erzeugt werden. Die Länge und Breite der Kerne ist an sich unkritisch und richtet sich nach den maschinellen Gegebenheiten. Beispielsweise kann die Ausdehnung eines Kerns von 0,25 - 5 m sowohl in der Länge, als auch Breite, betragen.

Die Höhe der zellenförmigen Kerne kann von 2,5 - 100 mm betragen, wobei eine Höhe von 5 bis 25 mm bevorzugt ist Die Zellen oder Waben laufen in den Kernen In Richtung deren Höhe.

Die zellenförmigen Kerne stellen z. B. Bündel von einzelnen Zellen dar. Die einzelnen Zellen können in der Draufsicht einen runden oder polygonalen, z. B. viereckigen oder sechseckigen, Querschnitt aufweisen. Entsprechend können die Kerne in der Draufsicht die Gestalt von z. B. Rohrbündeln oder Honigwaben aufweisen. Bevorzugt als zellenförmige Kerne sind Wabenkerne mit sechsecklgem Querschnitt einer einzelnen Zellen.

Vorliegende Erfindung betrifft auch Verfahren zur Herstellung von Verbundplatten aus einem zellenförmigen Kern und mindestens einer Deckschicht und einem zwischen den Stirnseiten des zellenförmigen Kerns und der Deckschicht angeordneten Klebstoff, wobei der zellenförmige Kern eine Wabenstruktur aus Aluminium ist, die an der zu verklebenden Stimfront der Wabenstruktur mit einem Klebstoff belegt und die eine Deckschicht in Form eines Papiers oder eines faserhaltigen Flächengebildes mit der Stirnseite der Wabenstruktur in gegenseitige Berührung gebracht und trennfest verklebt wird. Nach dem Verfahren der Erfindung wird die Stirnfront mit einem reaktiven Schmelzklebstoff, einem reaktiven Hotmelt, einem reaktiven Schmelzklebstoff auf Grundlage von Polyurethanen, einem reaktiven Schmelzklebstoff oder reaktiven Hotmelt, welche die Eigenschaften der Schmelzklebstoffe mit denen der reaktiven Polyurethane kombinieren, oder einem Holzleim belegt.

Der Klebstoff kann pulverig, pastös, hochviskos, zähflüssig oder flüssig sein und wird durch rakeln, streichen, walzen (z.B. mittels Rollcoater), sprühen oder eintauchen usw. auf die Stirnseite oder Stirnfront der Wabenstruktur aufgebracht. Der Klebstoff kann sich nach dem Auftrag auf die Stirnseite des Wabenmaterials auch von der Stirnseite der Wabe etwas entlang der Wabenwände ausdehnen. Danach kann das Deckmaterial auf die beleimte Stirnseite der Wabe gelegt werden, wobei sich der zellförmige Kern und die Deckschicht, fallweise unter Anwendung von Wärme und/oder Druck, verbinden.

Wird eine Klebefolie angewendet, so wird beispielsweise die Klebefolie auf die Stirnseite des zellenförmigen Kerns aufgelegt. Nach dem Auflegen der Klebefolie auf die Stirnseite des zellenförmigen Kerns kann die Klebefolie mit Wärme und fallweise einem gasförmigen Medium beaufschlagt werden. Die Wärme kann z. B. durch Strahlung erzeugt werden und die Beaufschlagung mit dem gasförmigen Medium, wie Luft, kann mittels Gebläse erfolgen. In der Regel werden die beiden Prozesse kombiniert und die Beaufschlagung der Klebefolie kann zweckmässig über ein Heissluftgebläse und Düsenanordnungen mit Luft erfolgen. Unter dem Einfluss der Wärme erweicht die Klebefolie. Besonders durch die Strömung des gasförmigen Mediums reisst oder platzt die Klebefolie über den Wabenöffnungen. Durch Oberflächenspannungen zieht sich die Klebstoffmasse zurück und konzentriert sich an den Stirnkanten der Waben.

Das Verbinden der jeweiligen Deckschichten mit dem zellenförmigen Kern erfolgt beispielsweise unter Druck und/oder erhöhter Temperatur. Der Druck, der über die Deckschicht auf die Klebstoffschicht und den Kern ausgeübt wird, kann beispielsweise 0,1 bis 1000 N/cm² betragen. In der Praxis können bevorzugt Drücke von 1 bis 500 N/cm² und insbesondere 10 bis 150 N/cm², angewendet werden. Die Druckanwendung erfolgt in der Regel durch mechanisch erzeugten Druck auf die Deckschichten. Dies kann durch eine Presse, enthaltend Stempel und Matrize, oder durch Abrollen einer Walze oder Rolle oder zwischen Walzen, Rollen oder Bändern erfolgen. Der Druck kann mechanisch, hydraulisch oder pneumatisch erzeugt werden. Beispielsweise in einer Rollenpresse sind Drücke von 10 bis 30 N (Punktlast), vorzugsweise 15 bis 20 N, vorteilhaft. Die angewendete Temperatur richtet sich in grossem Masse nach der Art des Klebstoffes und kann beispielsweise von 50 bis 400° C betragen, wobei ein Bereich von 100 bis 220° C bevorzugt ist.

Bevorzugt werden kontinuierliche Verfahren und insbesondere können die Deckschicht oder die Deckschichten mit dem zellenförmigen Kern in einer Doppelbandpresse verbunden werden.

Weitere Einzelheiten der Erfindung ergeben sich nachfolgend aus den beispielhaften schematischen Zeichnungen. Diese zeigen in:
Figuren 1a, 1b in perspektivischen Darstellungen einen Ausschnitt eines zellenförmigen Kerns und dabei beispielhaft eines Wabenkerns und eine einzelne Wabenzelle daraus.
Figur 2 einen Schnitt durch eine Deckschicht und einen Wabenkern mit aufgetragenem Klebstoff.
Figur 3 einen Schnitt durch eine Kontaktstelle von Wabenkern und Deckschicht und in
Figur 4 die Herstellung einer Verbundplatte mittels einer Doppelbandpresse.

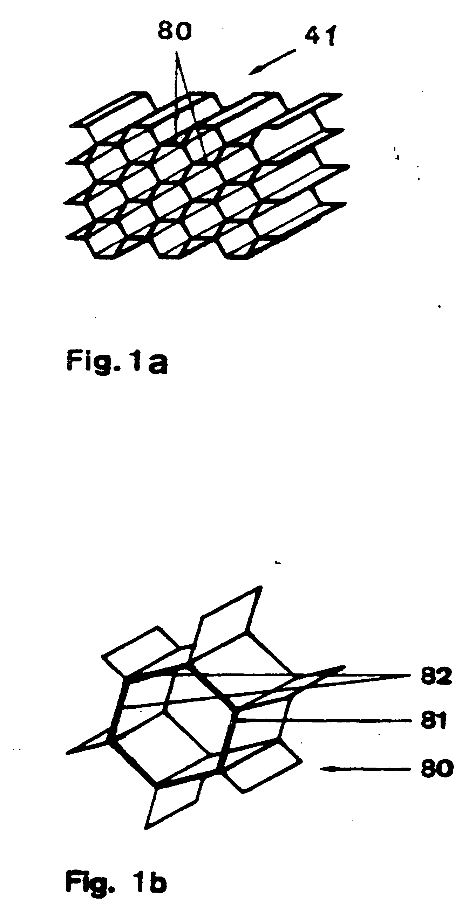

Figur 1 a zeigt einen zellenförmigen Kern 41 und dabei beispielhaft einen Wabenkern mit hexagonaler Ausbildung der Wabenzellen 80. Eine einzelne Wabenzelle 80 ist in Figur 1b dargestellt. Nach dem erfindungsgemässen Verfahren wird zunächst der Klebstoff 81, insbesondere möglichst auf die Stirnseiten 82 der Wabenzelle 41 gelegt. Im Wesentlichen nur an den Stirnkanten 82 der Wabenzellen 80 haftet der Klebstoff. Die Folge ist, dass alleinig an den Stirnkanten 82 Klebstoff vorhanden ist.

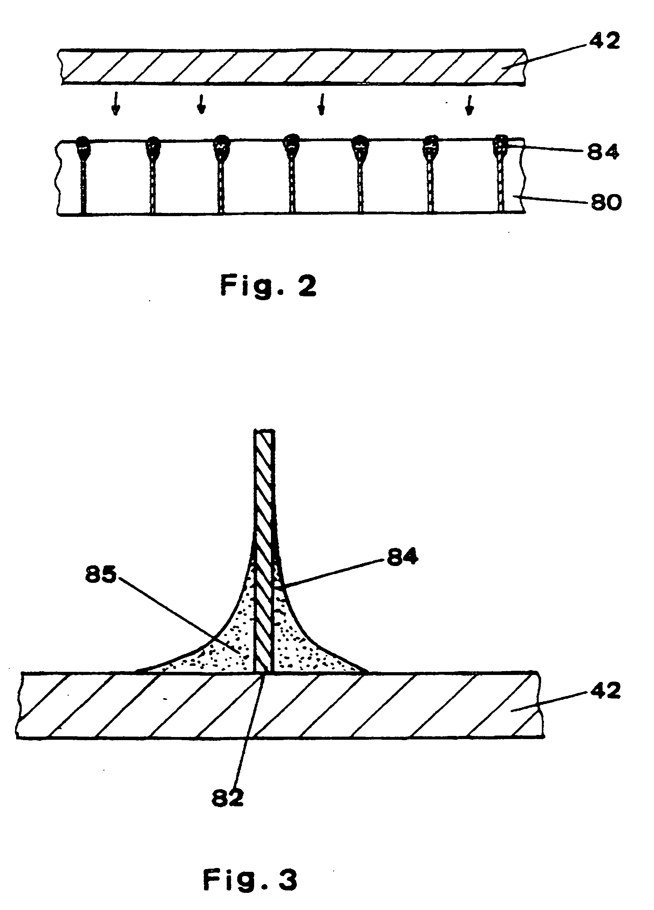

Gemäss Figur 2 wird der Klebstoff 84 auf die Stirnseite des Wabenkerns 41 aufgebracht und umhüllt tropfenförmig die Stirnkanten 82 und Randbereiche der

Wabenzellen 80. Danach wird die Deckschicht 42 in Pfeilrichtung und die Stirnkanten 82 über den Klebstoff 84 in gegenseitigen Kontakt gebracht.

Figur 3 zeigt eine Kontaktstelle von Wabenkern 41 und Deckschicht 42. Die tropfenförmige Ausbildung des Klebstoffes 84 an den Stirnkanten 82 der Wabenzellen 80 bildet danach eine Klebekontur 85 aus.

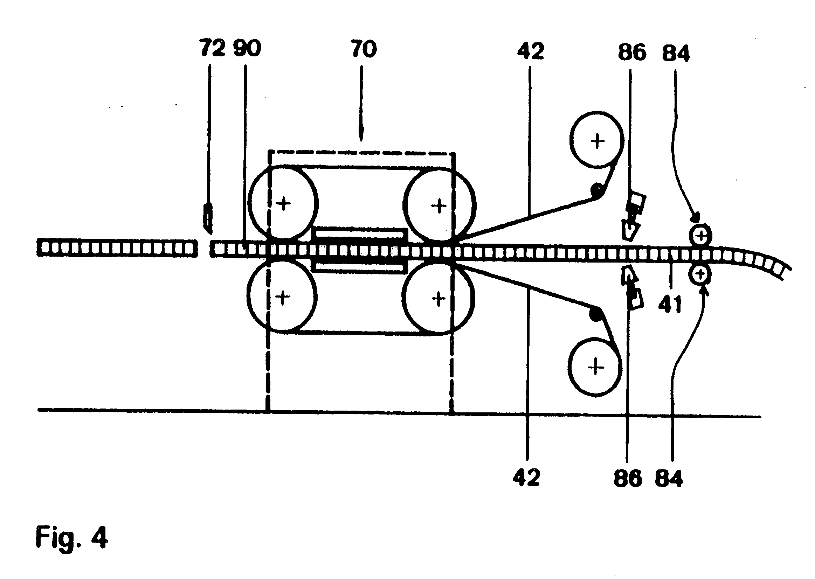

Figur 4 zeigt die Anwendung des erfindungsgemässen Verfahrens zur Herstellung einer kontinuierlich gefertigten Verbundplatte 90. Zunächst wird am Wabenkern 41 beidseits an den Stirnkanten 82 der Wabenzellen 80 der Klebstoff durch Aufwalzen 84 aufgetragen. Nach dem Auftragen des Klebstoffes 84 auf die Stirnkanten 82 des Wabenkerns 41 wird der Klebstoff 84 fallweise mit einem heissen gasförmigen Medium, insbesondere Heissluft, beaufschlagt. Dies kann mit den beidseits des Wabenkerns 41 beispielhaft angeordneten Heissluftgebläsen 86 geschehen. Diese Vorgehensweise bewirkt, dass der Klebstoff 84 erweicht, bzw. aufgeschmolzen, wird oder bleibt oder bei lösungsmittelhaltigen Klebstoffen das Lösungsmittel verdunstet oder bei reaktiven Klebstoffen die Reaktion anläuft oder eine Klebefolie aufplatzt und der Klebstoff klebebereit an den Stirnkanten 82 den Wabenzellen 80 verfügbar wird. Danach werden die Deckschichten 42 aufgebracht. Das aus dem Wabenkern 41 mit beidseits angeordnetem Klebstoff und den Deckschichten 42, beispielsweise aus Papier oder Vlies bestehende Sandwich wird beispielhaft einer Durchlaufpresse 70, wie einer Doppelbandpresse zugeführt und dort zu einer Verbundplatte 90 verbunden. Die so kontinuierlich hergestellte Verbundplatte 90 kann in an sich bekannter Weise durch eine Schneidvorrichtung 72 auf das gewünschte Mass abgelängt werden.

Vorliegende Erfindung betrifft auch Verbundplatten, herstellt nach dem erfindungsgemässen Verfahren oder nach seinen zweckmässigen oder bevorzugten Ausführungsformen.

Die erfindungsgemässen Verbundplatten, können beispielsweise als Bodenplatten, Seitenbeplankungen, Deckenplatten, Trennwänden, usw. in Transporteinrichtungen, wie Fahrzeugen aller Art, z.B. Personenkraftwagen, Lastkraftwagen, Bussen oder Eisenbahnwagen und in Flugzeugen oder an Grossbehältern, wie Containern, Luftfrachtcontainern oder dergl. oder als Boden-, Wand- oder Deckenplatten in oder an Gebäuden, verwendet werden. Die erfindungsgemässen Verbundplatten können darüber hinaus auch zu Möbeln, Möbelteilen, Inneneinrichtungen oder Inneneinrichtungsteilen verarbeitet werden.

## Patentansprüche

1. Verbundplatte aus einem zellenförmigen Kern und mindestens einer Deckschicht, wobei der zellenförmige Kern eine Wabenstruktur aus Aluminium, die Deckschicht oder die Deckschichten ein Papier oder ein faserhaltiges Flächengeblide sind, und einem zwischen den Stirnseiten des zellenförmigen Kerns und der Deckschicht angeordneten Klebstoff,
**dadurch gekennzeichnet, dass**
der Klebstoff ein reaktiver Schmelzklebstoffe, ein reaktiver Hotmelt, ein reaktiver Schmelzklebstoff auf Grundlage von Polyurethanen, ein reaktiver Schmelzklebstoff oder reaktiver Hotmelt, welcher die Eigenschaften der Schmelzklebstoffe mit denen der reaktiven Polyurethane kombiniert, oder ein Holzleim ist.

2. Verbundplatte gemäss Anspruch 1, **dadurch gekennzeichnet, dass** der zellenförmige Kern ein Wabenkern, zweckmässig ein Wabenkern mit Zellen polygonalen Querschnittes und Insbesondere mit Waben, sechseckigen Querschnittes, ist.

3. Verbundplatte gemäss Ansprüchen 1 und 2, **dadurch gekennzeichnet, dass** die Deckschicht oder die Deckschichten Mineralpapiere, Melaminpapiere oder Mehrlagenvliese sind.

4. Verfahren zur Herstellung von Verbundplatten aus einem zellenförmigen Kern und mindestens einer Deckschicht und einem zwischen den Stirnseiten des zellenförmigen Kerns und der Deckschicht angeordneten Klebstoff, wobei der zellenförmige Kern eine Wabenstruktur aus Aluminium ist, die an der zu verklebenden Stirnfront der Wabenstruktur mit einem Klebstoff belegt und die eine Deckschicht in Form eines Papiers oder eines faserhaltigen Flächengebildes mit der Stirnseite der Wabenstruktur In gegenseitige Berührung gebracht und trennfest verklebt wird, nach Anspruch 1,
**dadurch gekennzeichnet, dass**
die Stirnfront mit einem reaktiven Schmelzklebstoff, einem reaktiven Hotmelt, einem reaktiven Schmelzklebstoff auf Grundlage von Polyurethanen, einem reaktiven Schmelzklebstoff oder reaktiven Hotmelt, welche die Eigenschaften der Schmelzklebstoffe mit denen der reaktiven Polyurethane kombinieren, oder einem Holzleim belegt wird.

5. Verfahren zur Herstellung von Verbundplatten nach Anspruch 4, **dadurch gekennzeichnet, dass** der reaktive Hotmelt durch den Phasenübergang von flüssig zu fest beim Abkühlen eine ausreichende Frühfestigkeit erreicht und die endgültige Aushärtung bei der Vernetzung der Polyurethananteile mit Luftfeuchtigkeit geschieht.

## Claims

1. Composite panel made of a cellular core and at least one surface layer, the cellular core being a honeycomb structure made of aluminium, the surface layer or the surface layers being a paper or a fibrous fabric, and of an adhesive arranged between the end faces of the cellular core and the surface layer, **characterised in that** the adhesive is a reactive hot-melt adhesive, a reactive hot melt, a reactive hot-melt adhesive on the basis of polyurethanes, a reactive hot-melt adhesive or reactive hot melt which combines the properties of the hot-melt adhesive with those of the reactive polyurethanes, or a wood glue.

2. Composite panel according to claim 1, **characterised in that** the cellular core is a honeycomb core, where appropriate a honeycomb core having cells with a polygonal cross section, and In particular having honeycombs with a hexagonal cross section.

3. Composite panel according to claims 1 and 2, **characterised In that** the surface layer or the surface layers are mineral papers, melamine papers or multilayer nonwoven fabrics.

4. Method for producing composite panels from a cellular core and at least one surface layer and an adhesive arranged between the end faces of the cellular core and the surface layer, the cellular core being a honeycomb structure made of aluminium which is coated with an adhesive on the front side which is to be adhered of the honeycomb structure and which brings a surface layer In the form of a paper or a fibrous fabric into mutual contact with the end face of the honeycomb structure and is strongly adhered, according to claim 1, **characterised in that** the front side is coated with a reactive hot-melt adhesive, a reactive hot melt, a reactive hot-melt adhesive on the basis of polyurethanes, a reactive hot-melt adhesive or reactive hot-melt which combines the properties of the hot-melt adhesive with those of the reactive polyurethanes, or a wood glue.

5. Method for producing composite panels according to claim 4, **characterised in that** the reactive hot melt reaches a sufficient early strength by means of the phase transition from liquid to solid during cooling, and the final hardening takes place during the crosslinking of the polyurethane fraction with air moisture.

## Revendications

1. Plaque composite en un noyau cellulaire et au moins une couche de recouvrement, où le noyau cellulaire est une structure alvéolaire en aluminium, la couche de recouvrement ou les couches de recouvrement sont un papier ou un produit plan contenant des fibres, et un adhésif disposé entre les côtés frontaux du noyau cellulaire et de la couche de recouvrement,
**caractérisée en ce que**
l'adhésif est un adhésif fusible réactif, un adhésif thermofusible réactif, un adhésif fusible réactif à base de polyuréthanes, un adhésif fusible réactif ou un adhésif thermofusible réactif, qui combine les propriétés des adhésifs fusibles avec celles des polyuréthanes réactifs, ou une colle à bois.

2. Plaque composite selon la revendication 1, **caractérisée en ce que** le noyau cellulaire est un noyau alvéolaire, judicieusement un noyau alvéolaire ayant des cellules de section droite polygonale et en particulier ayant des alvéoles de section droite hexagonale.

3. Plaque composite selon les revendications 1 et 2, **caractérisée en ce que** la couche de recouvrement ou les couches de recouvrement sont des papiers minéraux, des papiers mélaminés ou des matelas multi-couches.

4. Procédé de production de plaques composites en un noyau cellulaire et au moins une couche de recouvrement et un adhésif disposé entre les côtés frontaux du noyau cellulaire et de la couche de recouvrement, où le noyau cellulaire est une structure alvéolaire en aluminium qui est munie d'un adhésif au niveau de la face frontale de la structure alvéolaire qui doit être collée, et la couche de recouvrement sous forme d'un papier ou d'un produit plan contenant des fibres est mise en contact mutuel et collée de manière résistant à la séparation avec le côté frontal de la structure alvéolaire, selon la revendication 1,
**caractérisé en ce que**
la face frontale est munie d'un adhésif fusible réactif, d'un adhésif thermofuslble réactif, d'un adhésif fusible réactif à base de polyuréthanes, d'un adhésif fusible réactif ou d'un adhésif thermofuslble réactif, qui combinent les propriétés des adhésifs fusibles avec celles des polyuréthanes réactifs, ou d'une colle à bois.

5. Procédé de production de plaques composites selon la revendication 4, **caractérisé en ce que** l'adhésif thermofusible réactif atteint par la transition de phase de liquide à solide lors du refroidissement une fermeté initiale suffisante et le durcissement final se déroule lors de la réticulation des parties polyuréthane avec l'humidité de l'air.
